# EUROPEAN PATENT APPLICATION

(11) **EP 4 801 091 A1**
(43) Date of publication of application: **02.09.2026**
(21) Application number: 26158987.3
(22) Date of filing: 17.02.2026
(51) Int. Cl.: H04W 16/14, H04W 84/12

(54) **SYNCHRONIZING BLUETOOTH ACCESS GRANTS IN WI-FI-CONNECTED DEVICES**

(30) Priority: 27.02.2025 US 202519066113
(71) Applicant: Avago Technologies International Sales Pte. Limited, Singapore 768923 (SG)
(72) Inventor: BADERDINNI, Ajaykumar, 560100 Bangalore, Karnataka (IN); JOSEPH, Bobby Ranjan, 560100 Bangalore, Karnataka (IN); ASOKAN, Pradhap, 560100 Bangalore, Karnataka (IN); SHETIYA, Harish, 560100 Bangalore, Karnataka (IN); DEVULAPALLI, Amrit Swarup, 560100 Bangalore, Karnataka (IN)
(74) Representative: Dilg, Haeusler, Schindelmann Patentanwaltsgesellschaft mbH

(57) **Abstract**

Methods, systems, and devices for synchronizing Bluetooth access grants in Wi-Fi-connected devices are described. In some implementations, a method may include establishing a Wi-Fi connection between a first device and a second device, both equipped with Bluetooth capabilities. The method may involve determining a target beacon transmit time for the Wi-Fi connection and synchronizing Bluetooth access grants between the first and second devices based on the target beacon transmit time. Consequently, medium access may be granted to Bluetooth on both the first and second devices simultaneously in response to the synchronized Bluetooth access grants, thereby enhancing the efficiency of medium usage and improving overall device coexistence and performance in Wi-Fi/Bluetooth combination environments.

## Description

### FIELD OF TECHNOLOGY

The present disclosure relates generally to wireless technologies including Bluetooth and Wi-Fi, and more specifically to synchronizing Bluetooth access grants in Wi-Fi-connected devices.

### BACKGROUND

In the field of wireless communications, devices often operate within shared frequency bands, where multiple technologies may coexist and perform data transmission and reception tasks. These technologies may include Wi-Fi and Bluetooth, which may both be active in the same spectral space. Devices connected over Wi-Fi may engage in various activities, including data transfer, and may require efficient medium access control to maintain connectivity and performance.

### SUMMARY

The described techniques relate to improved methods, systems, devices, and apparatuses that support techniques for synchronizing Bluetooth access grants in Wi-Fi-connected devices. In some examples, a method may enhance the coexistence of wireless local area network technologies and Bluetooth technologies by synchronizing Bluetooth grants between devices connected over a wireless network. By using the Target Beacon Transmit Time as a common reference point, the method may ensure that both devices coordinate their medium access grants to Bluetooth. This synchronization may allow for simultaneous medium access by Bluetooth across the devices, thereby minimizing the cumulative medium time loss that would otherwise occur with independent Time Division Multiplexing arbitration. As a result, the shared medium may be utilized more efficiently, and the potential for medium time wastage may be significantly reduced.

Moreover, the synchronized approach may mitigate the need for certain medium protection mechanisms, such as the transmission of protection frames, which are typically used to prevent data loss during unscheduled medium access by coexisting technologies. By aligning the off periods of the devices, some implementations may ensure that wireless local area network technologies can maintain higher data rates and avoid unnecessary fallbacks, leading to improved throughput and user experience. The method may be particularly effective for Bluetooth activities that can tolerate delayed grants, such as Basic Rate/Enhanced Data Rate (BR/EDR) Asynchronous Connection-oriented links, Advanced Audio Distribution Profile streaming, and Bluetooth Low Energy scans. The scalability of the solution may allow for its application across various Bluetooth profiles and other technologies sharing the Industrial, Scientific, and Medical band, making it a versatile approach to managing coexistence in a multi-technology wireless environment.

A method for synchronizing Bluetooth access grants in Wi-Fi-connected devices is described. The method may include establishing a Wi-Fi connection between a first device and a second device, wherein the first device and the second device each have Bluetooth capabilities. The method may include determining a target beacon transmit time (TBTT) for the Wi-Fi connection. The method may include synchronizing Bluetooth access grants between the first device and the second device based on the TBTT. The method may include granting medium access to Bluetooth on the first device and the second device simultaneously in response to the synchronized Bluetooth access grants.

A system configured for synchronizing Bluetooth access grants in Wi-Fi-connected devices is described. The system may include a processor. The system may include memory coupled with the processor. The system may include instructions stored in the memory and executable by the processor to cause the system to establish a Wi-Fi connection between a first device and a second device, each having Bluetooth capabilities. The system may include instructions to determine a target beacon transmit time (TBTT) for the Wi-Fi connection. The system may include instructions to synchronize Bluetooth access grants between the first device and the second device based on the TBTT. The system may include instructions to grant medium access to Bluetooth on the first device and the second device simultaneously in response to the synchronized Bluetooth access grants.

Another system for synchronizing Bluetooth access grants in Wi-Fi-connected devices is described. The system may include means for establishing a Wi-Fi connection between a first device and a second device, the first device and the second device each having Bluetooth capabilities. The system may include means for determining a TBTT for the Wi-Fi connection. The system may include means for synchronizing Bluetooth access grants between the first device and the second device based on the TBTT. The system may include means for granting medium access to Bluetooth on the first device and the second device simultaneously in response to the synchronized Bluetooth access grants.

A non-transitory computer-readable medium storing code for wireless communication at a UE is described. The code may include instructions executable by a processor to establish a Wi-Fi connection between a first device and a second device, wherein the first device and the second device each have Bluetooth capabilities. The code may include instructions executable by a processor to determine a TBTT for the Wi-Fi connection. The code may include instructions executable by a processor to synchronize Bluetooth access grants between the first device and the second device based on the TBTT. The code may include instructions executable by a processor to grant medium access to Bluetooth on the first device and the second device simultaneously in response to the synchronized Bluetooth access grants.

Some examples of the method, systems, and non-transitory computer-readable medium described herein may further include operations, features, means, or instructions for transmitting a protection frame from the first device to the second device in response to the synchronized Bluetooth access grants to prevent data transmission from the second device during the Bluetooth access period.

Some examples of the method, systems, and non-transitory computer-readable medium described herein may further include operations, features, means, or instructions for adjusting the duration of the Bluetooth access grants based on the type of Bluetooth activity. The Bluetooth activity may include at least one of advanced audio distribution profile (A2DP), basic rate/ enhanced data rate (BR/EDR) asynchronous logical transport (ACL), BR/EDR scans, BR/EDR Inquiry, Paging, BLE Init Scan, low energy (LE) scans, and the like. In some implementations, the Bluetooth activity may include Bluetooth profiles using IEEE^{®} 802.15.4-based standards (e.g., Thread, Zigbee^{®}, etc.).

Some examples of the method, systems, and non-transitory computer-readable medium described herein may further include operations, features, means, or instructions for delaying the Bluetooth access grants in response to a request from the first device or the second device to accommodate a high-priority Wi-Fi data transfer occurring at the same time as the TBTT.

Some examples of the method, systems, and non-transitory computer-readable medium described herein may further include operations, features, means, or instructions for sharing the TBTT information between the first device and the second device through a shared memory interface to facilitate the synchronization of the Bluetooth access grants.

Some examples of the method, systems, and non-transitory computer-readable medium described herein may further include operations, features, means, or instructions for associating a priority level with each Bluetooth access grant. The priority level may determine the order in which the first device and the second device grant medium access to Bluetooth.

In some examples of the method, systems, and non-transitory computer-readable medium described herein, the synchronized Bluetooth access grants may be configured to support a plurality of Bluetooth profiles concurrently, enhancing the user experience during simultaneous multimedia activities.

In some examples of the method, systems, and non-transitory computer-readable medium described herein, the TBTT may be adjusted in response to changes in the Wi-Fi environment, maintaining synchronization of the Bluetooth access grants despite dynamic network conditions.

In some examples of the method, systems, and non-transitory computer-readable medium described herein, the first device and the second device may exchange information regarding their respective Bluetooth access grants through a dedicated control channel, ensuring precise coordination.

In some examples of the method, systems, and non-transitory computer-readable medium described herein, the synchronized Bluetooth access grants may be adapted to account for the latency requirements of the Bluetooth activities, balancing the needs of time-sensitive applications.

### BRIEF DESCRIPTION OF THE DRAWINGS

**FIG. 1** illustrates an example of a wireless communications system that supports synchronizing Bluetooth access grants in Wi-Fi-connected devices in accordance with aspects of the present disclosure.
**FIG. 2** shows Wi-Fi BT coexistence which supports techniques for synchronizing Bluetooth access grants in Wi-Fi-connected devices in accordance with various aspects of the present disclosure.
**FIG. 3** shows synchronized medium grants which supports techniques for synchronizing Bluetooth access grants in Wi-Fi-connected devices in accordance with various aspects of the present disclosure.
**FIG. 4** shows WLAN BT coexistence which supports techniques for synchronizing Bluetooth access grants in Wi-Fi-connected devices in accordance with various aspects of the present disclosure.
**FIG. 5** shows synchronized medium grants which supports techniques for synchronizing Bluetooth access grants in Wi-Fi-connected devices in accordance with various aspects of the present disclosure.
**FIG. 6** illustrates an example of a process flow that supports synchronizing Bluetooth access grants in Wi-Fi-connected devices in accordance with various aspects of the present disclosure.
**FIG. 7** shows a block diagram of an apparatus that supports synchronizing Bluetooth access grants in Wi-Fi-connected devices in accordance with various aspects of the present disclosure.
**FIG. 8** shows a block diagram of a synchronization management component that supports synchronizing Bluetooth access grants in Wi-Fi-connected devices in accordance with various aspects of the present disclosure.
**FIG. 9** shows a diagram of a system including a device that supports synchronizing Bluetooth access grants in Wi-Fi-connected devices in accordance with various aspects of the present disclosure.
**FIGS. 10** and **11** show flowcharts illustrating methods that support synchronizing Bluetooth access grants in Wi-Fi-connected devices in accordance with various aspects of the present disclosure.

### DETAILED DESCRIPTION

The following standards, including any draft versions of such standards, are hereby incorporated by reference in their entirety and are made a part of the present disclosure for all purposes: Wi-Fi^{®} Alliance^{®} standards and Institute of Electrical and Electronics Engineers (IEEE^{®}) 802.11 standards, including, but not limited to, 802.11^{™}, 802.11a^{™}, 802.11b^{™}, 802.11g^{™}, 802.11n^{™}, 802.11ac^{™}, 802.11ax^{™}, 802.11be^{™}, 802.11ad^{™}, 802.11ay^{™}, 802.11af^{™}, 802.11ah^{™}, 802.11ai^{™}, 802.11aj^{™}, 802.11ak^{™}, 802.11aq^{™}, 802.11ba^{™}, 802.11c^{™}, 802.11d^{™}, 802.11e^{™}, 802.11f^{™}, 802.11h^{™}, 802.11i^{™}, and 802.11j^{™}. Additionally, Bluetooth^{®} wireless communication standards and specifications established by the Bluetooth Special Interest Group (Bluetooth SIG), including, but not limited to, Bluetooth Core Specification versions 1.0 through 5.4, Bluetooth Mesh Profile Specification, Bluetooth Low Energy (LE) specifications, and related protocols such as a Generic Attribute Profile (GATT), Logical Link Control and Adaptation Protocol (L2CAP), and Host Controller Interface (HCI), are also incorporated by reference in their entirety, and Bluetooth^{®} standards including, but not limited to, IEEE^{®} 802.15.4-based standards. Although the present disclosure may reference aspects of these standard(s), the disclosure is in no way limited by these standard(s).

Methods, systems, devices, and apparatuses that support techniques for synchronizing Bluetooth access grants in Wi-Fi -connected devices are disclosed. In some examples, environments where Wi-Fi and Bluetooth devices are operating concurrently, the lack of coordinated medium access control may lead to inefficient use of the shared radio spectrum. Each device typically manages its own medium access through independent time division multiplexing arbitration, resulting in non-overlapping grants of medium access to Bluetooth. This disjointed approach may cause cumulative time loss for Wi-Fi communication, as the medium is effectively unavailable when either device grants access to Bluetooth. The situation is exacerbated in peer-to-peer or soft access point-client networks, where both devices may independently grant access to Bluetooth, leading to a compounded loss of medium time. Furthermore, without proper protection mechanisms, there is a risk of data rate adaptation issues and throughput loss, which may degrade the quality of service for high-priority data streams, potentially causing network disconnections and user experience deterioration.

According to some implementations, some implementations may involve the synchronization of Bluetooth grants between two devices that are connected over a Wi-Fi network. This synchronization may be aimed at utilizing the medium more efficiently during the periods when Bluetooth is granted access to the medium. The method may employ the Target Beacon Transmit Time as a reference to synchronize grants between peer devices in networks such as Point to Point and Soft Access Point networks. The Target Beacon Transmit Time is a timing reference used in Wi-Fi networks to coordinate the transmission of beacon frames.

Some implementations may include a reduction of medium time loss by ensuring that the total medium time lost for Wi-Fi is reduced from the cumulative time lost for each device to the maximum time lost by any single device. This may be because the grants to the coexisting technology would overlap, leading to a more efficient usage of the shared medium.

In some implementations, synchronization may help maintain Wi-Fi data rates in cases where traditional medium protection methods are ineffective. Synchronization may eliminate the need for some protection mechanisms, as both devices would be off the Wi-Fi medium simultaneously.

Some implementations may be particularly effective for Bluetooth activities that can tolerate delayed grants, such as Asynchronous Connection-Less links, Advanced Audio Distribution Profile, and Bluetooth Low Energy scans. These activities are generally periodic in nature, making synchronization feasible.

Some implementations may involve the use of shared memory for Wi-Fi timing information. For periodic Bluetooth activities, the co-located Bluetooth may use Wi-Fi (e.g., WLAN) timing information through shared memory to synchronize the start of the Bluetooth activity window.

Variations and applications may be allowed in some implementations of the method of synchronization beyond the use of Target Beacon Transmit Time. It could involve an internal communication protocol established between devices to achieve synchronization.

Some implementations may lead to improved efficiency of medium usage. The synchronized grants may lead to efficient usage of the shared medium between Wi-Fi and Bluetooth, improving the performance of both technologies.

The solution in some implementations may be scalable and can be extended to include more Bluetooth applications such as voice calls and music streaming. It may also be adapted to synchronize grants for other technologies sharing the Industrial, Scientific, and Medical band.

Some implementations may include a timing diagram illustration. The invention may include a timing diagram that illustrates synchronized medium grants to Bluetooth across devices, showing how the grants are aligned with fixed offsets from the Target Beacon Transmit Time within a beacon period. Each Bluetooth slot may be associated with a grant priority, and multiple slots can be synchronized.

Market relevance and future scope may be considered in some implementations. The system may be relevant to the market as it improves the coexistence of Wi-Fi and Bluetooth technologies in devices. It may have the potential to be applied to various scenarios where these technologies are used simultaneously, such as data transfer, streaming, or using Bluetooth peripherals while maintaining a Wi-Fi connection.

Aspects of the subject matter described in this disclosure can be implemented to realize one or more of the following potential advantages. The described techniques may be implemented to support enhanced user experiences by reducing latency and improving the reliability of connections when multiple wireless technologies are in use concurrently. The synchronization approach may lead to a decrease in the likelihood of interference, which may result in a more stable connection for both Wi-Fi and Bluetooth communications. The described system may allow for a more predictable performance pattern, which may be beneficial in environments where timing and consistency of data transmission are critical. The approach may be particularly advantageous in scenarios where Wi-Fi and Bluetooth are used for real-time applications, as synchronized grants may minimize disruptions. The techniques may be adaptable to a range of devices and network configurations, potentially leading to widespread applicability and ease of integration into existing systems.

Aspects of the disclosure are initially described in the context of networked computing systems. Aspects of the disclosure are additionally illustrated by and described with reference to example implementations. Aspects of the disclosure are further illustrated by and described with reference to apparatus diagrams, system diagrams, and flowcharts that relate to synchronizing Bluetooth access grants in Wi-Fi-connected devices.

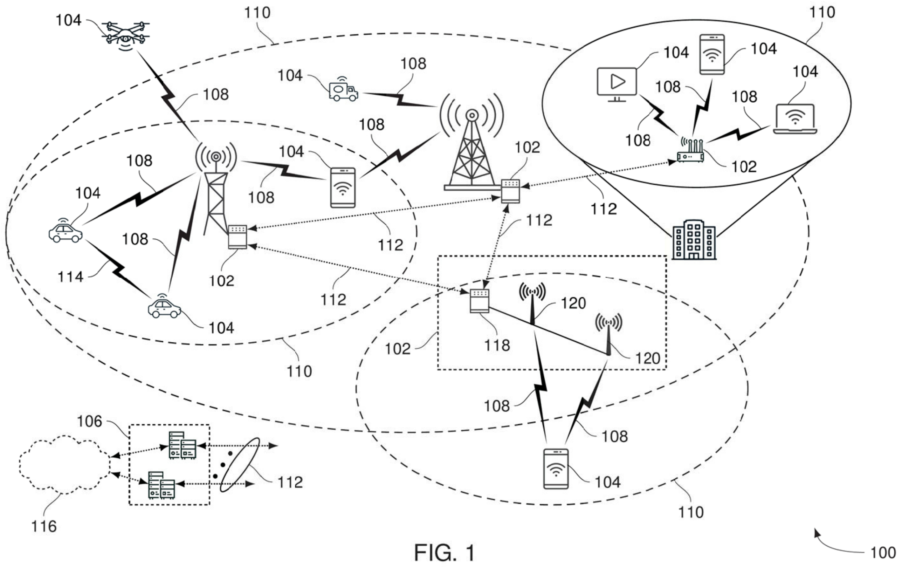

**FIG. 1** illustrates an example of a wireless communications system 100 that supports techniques for synchronizing Bluetooth access grants in Wi-Fi-connected devices in accordance with various aspects of the present disclosure. The wireless communications system **100** may include one or more base stations **102,** one or more UEs **104,** and a core network **106.** In some implementations, the network may include any type and/or form of network. As an example, the network may include a point-to-point network, a broadcast network, a telecommunications network, a data communication network, and/or a computer network, among other examples. The network may include any suitable network topology, such as a bus, a star, and/or a ring network topology, among other examples. Accordingly, for example, the network may be any suitable network topology capable of supporting the systems and methods described herein. In some implementations, the network may include a wireless wide area network (WAN) (e.g., a cellular network or a public land mobile network), a local area network (LAN) (e.g., a wired LAN or a wireless local area network (WLAN), such as a Wi-Fi^{®} network), a wireless personal area network (WPAN) (e.g., a Bluetooth^{®} network), a near-field communication network, a Zigbee^{®} network, a long range wide area network (LoRaWAN^{®}), an ultra-wideband (UWB) network, a worldwide interoperability for microwave access (WiMAX^{®}) network, a satellite network, a telephone network, a private network, the Internet, or a combination of these and other network types. Additionally, in some implementations, different types of data may be transmitted using different protocols, and the same type of data may also be transmitted using multiple protocols. In some examples, the wireless communications system **100** may be a Long Term Evolution (LTE) network, an LTE-Advanced (LTE-A) network, an LTE-A Pro network, or a New Radio (NR) network. In some examples, the wireless communications system **100** may support enhanced broadband communications, ultra-reliable (e.g., mission critical) communications, low latency communications, communications with low-cost and low-complexity devices, or any combination thereof.

The base stations **102** may be dispersed throughout a geographic area to form the wireless communications system **100** and may be devices in different forms or having different capabilities. The base stations **102** and the UEs **104** may wirelessly communicate via one or more communication links **108.** Each base station **102** may provide a geographic coverage area **110** over which the UEs **104** and the base station **102** may establish one or more communication links **108.** The geographic coverage area **110** may be an example of a geographic area over which a base station **102** and a UE **104** may support the communication of signals according to one or more radio access technologies.

The UEs **104** may be dispersed throughout a geographic coverage area **110** of the wireless communications system **100,** and each UE **104** may be stationary, or mobile, or both at different times. The UEs **104** may be devices in different forms or having different capabilities. Some example UEs **104** are illustrated in **FIG. 1****.** The UEs **104** described herein may be able to communicate with various types of devices, such as other UEs **104,** the base stations **102,** or network equipment (e.g., core network nodes, relay devices, integrated access and backhaul (IAB) nodes, or other network equipment), as shown in **FIG. 1****.**

The base stations **102** may communicate with the core network **106,** or with one another, or both. For example, the base stations **102** may interface with the core network **106** through one or more backhaul links **112** (e.g., via an S1, N2, N3, or other interface). The base stations **102** may communicate with one another over the backhaul links **112** (e.g., via an X2, Xn, or other interface) either directly (e.g., directly between base stations **102),** or indirectly (e.g., via core network **106),** or both. In some examples, the backhaul links **112** may be or include one or more wireless links.

One or more of the base stations **102** described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE **104** may include or may be referred to as a mobile device, a wireless device, a remote device, a handheld device, or a subscriber device, or some other suitable terminology, where the "device" may also be referred to as a unit, a station, a terminal, or a client, among other examples. A UE **104** may also include or may be referred to as a personal electronic device such as a cellular phone, a personal digital assistant (PDA), a tablet computer, a laptop computer, or a personal computer. In some implementations, a UE **104** may be a P2P Group Owner device (e.g., smartphones, Smart TVs, media streaming devices, printers, gaming consoles, smart home hubs, digital cameras, etc.). In some implementations, a UE **104** can be a P2P Group Client device (e.g., smartphones, tablets, laptops, smart watches, wireless headphones, IoT sensors, security cameras, portable gaming devices, etc.). Note that many devices, especially smartphones, can function as either GO or GC depending on the use case and negotiation during connection setup. For example, when two smartphones establish a P2P connection for file transfer, they negotiate which device will become the GO based on factors like battery level, processing capability, and user settings. In some implementations, a UE **104** is a SoftAP device (e.g., smart speakers, smart thermostats, smart lighting hubs, smartphones, tablets that support hotspot functionality, security cameras, smart doorbells, smart plugs, gaming consoles, smart TVs, etc.). In some examples, a UE **104** may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs **104** described herein may be able to communicate with various types of devices, such as other UEs **104** that may sometimes act as relays as well as the base stations **102** and the network equipment including macro eNBs or gNBs, small cell eNBs or gNBs, or relay base stations, among other examples, as shown in **FIG. 1****.**

The UEs **104** and the base stations **102** may wirelessly communicate with one another via one or more communication links **108** over one or more carriers. The term "carrier" may refer to a set of radio frequency spectrum resources having a defined physical layer structure for supporting the communication links **108.** For example, a carrier used for a communication link **108** may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system **100** may support communication with a UE **104** using carrier aggregation or multi-carrier operation. A UE **104** may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs **104.** A carrier may be operated in a standalone mode where initial acquisition and connection may be conducted by the UEs **104** via the carrier, or the carrier may be operated in a non-standalone mode where a connection is anchored using a different carrier (e.g., of the same or a different radio access technology).

The communication links **108** shown in the wireless communications system **100** may include uplink transmissions from a UE **104** to a base station **102,** or downlink transmissions from a base station **102** to a UE **104.** Carriers may carry downlink or uplink communications (e.g., in an FDD mode) or may be configured to carry downlink and uplink communications (e.g., in a TDD mode).

A carrier may be associated with a bandwidth of the radio frequency spectrum, and in some examples the carrier bandwidth may be referred to as a "system bandwidth" of the carrier or the wireless communications system **100.** For example, the carrier bandwidth may be one of a number of determined bandwidths for carriers of a radio access technology (e.g., 1.4, 3, 5, 10, 15, 20, 40, or 80 megahertz (MHz)). Devices of the wireless communications system **100** (e.g., the base stations **102,** the UEs **104,** or both) may have hardware configurations that support communications over a carrier bandwidth or may be configurable to support communications over one of a set of carrier bandwidths. In some examples, the wireless communications system **100** may include base stations **102** or UEs **104** that support simultaneous communications via carriers associated with multiple carrier bandwidths. In some examples, each served UE **104** may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may include one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE **104** receives and the higher the order of the modulation scheme, the higher the data rate may be for the UE **104.** A wireless communications resource may refer to a combination of a radio frequency spectrum resource, a time resource, and a spatial resource (e.g., spatial layers or beams), and the use of multiple spatial layers may further increase the data rate or data integrity for communications with a UE **104.**

One or more numerologies for a carrier may be supported, where a numerology may include a subcarrier spacing (Δf) and a cyclic prefix. A carrier may be divided into one or more BWPs having the same or different numerologies. In some examples, a UE **104** may be configured with multiple BWPs. In some examples, a single BWP for a carrier may be active at a given time and communications for the UE **104** may be restricted to one or more active BWPs.

The time intervals for the base stations **102** or the UEs **104** may be expressed in multiples of a basic time unit which may, for example, refer to a sampling period of T*ₛ*=1/(Δf*ₘₐₓ*·N*_{f}*) seconds, where Δf*ₘₐₓ* may represent the maximum supported subcarrier spacing, and N*_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems **100,** a slot may further be divided into multiple mini-slots containing one or more symbols. Excluding the cyclic prefix, each symbol period may contain one or more (e.g., N*_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system **100** and may be referred to as a transmission time interval (TTI). In some examples, the TTI duration (e.g., the number of symbol periods in a TTI) may be variable. Additionally or alternatively, the smallest scheduling unit of the wireless communications system **100** may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs **104.** For example, one or more of the UEs **104** may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs **104** and UE-specific search space sets for sending control information to a specific UE **104.**

Each base station **102** may provide communication coverage via one or more cells, for example a macro cell, a small cell, a hot spot, or other types of cells, or any combination thereof. The term "cell" may refer to a logical communication entity used for communication with a base station **102** (e.g., over a carrier) and may be associated with an identifier (ID) for distinguishing neighboring cells (e.g., a physical cell ID (PCID), a virtual cell ID (VCID), or others). In some examples, a cell may also refer to a geographic coverage area **110** or a portion of a geographic coverage area **110** (e.g., a sector) over which the logical communication entity operates. Such cells may range from smaller areas (e.g., a structure, a subset of structure) to larger areas depending on various factors such as the capabilities of the base station **102.** For example, a cell may be or include a building, a subset of a building, or exterior spaces between or overlapping with geographic coverage areas **110,** among other examples.

A macro cell covers a relatively large geographic area (e.g., several kilometers in radius) and may allow unrestricted access by the UEs **104** with service subscriptions with the network provider supporting the macro cell. A small cell may be associated with a lower-powered base station **102,** as compared with a macro cell, and a small cell may operate in the same or different (e.g., licensed, unlicensed) frequency bands as macro cells. Small cells may provide unrestricted access to the UEs **104** with service subscriptions with the network provider or may provide restricted access to the UEs **104** having an association with the small cell (e.g., the UEs **104** in a closed subscriber group (CSG), the UEs **104** associated with users in a home or office). A base station **102** may support one or multiple cells and may also support communications over the one or more cells using one or multiple component carriers.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station **102** may be movable and therefore provide communication coverage for a moving geographic coverage area **110.** In some examples, different geographic coverage areas **110** associated with different technologies may overlap, but the different geographic coverage areas **110** may be supported by the same base station **102.** In other examples, the overlapping geographic coverage areas **110** associated with different technologies may be supported by different base stations **102.** The wireless communications system **100** may include, for example, a heterogeneous network in which different types of the base stations **102** provide coverage for various geographic coverage areas **110** using the same or different radio access technologies.

The wireless communications system **100** may support synchronous or asynchronous operation. For synchronous operation, the base stations **102** may have similar frame timings, and transmissions from different base stations **102** may be approximately aligned in time. For asynchronous operation, the base stations **102** may have different frame timings, and transmissions from different base stations **102** may, in some examples, not be aligned in time. The techniques described herein may be used for either synchronous or asynchronous operations.

Some UEs **104,** such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a base station **102** without human intervention. In some examples, M2M communication or MTC may include communications from devices that integrate sensors or meters to measure or capture information and relay such information to a central server or application program that makes use of the information or presents the information to humans interacting with the application program. Some UEs **104** may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some UEs **104** may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for the UEs **104** include entering a power saving deep sleep mode when not engaging in active communications, operating over a limited bandwidth (e.g., according to narrowband communications), or a combination of these techniques. For example, some UEs **104** may be configured for operation using a narrowband protocol type that is associated with a defined portion or range (e.g., set of subcarriers or resource blocks (RBs)) within a carrier, within a guard-band of a carrier, or outside of a carrier.

The wireless communications system **100** may be configured to support ultra-reliable communications or low-latency communications, or various combinations thereof. For example, the wireless communications system **100** may be configured to support ultra-reliable low-latency communications (URLLC) or mission critical communications. The UEs **104** may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE **104** may also be able to communicate directly with other UEs **104** over a device-to-device (D2D) communication link **114** (e.g., using a peer-to-peer (P2P) or D2D protocol). One or more UEs **104** utilizing D2D communications may be within the geographic coverage area **110** of a base station **102.** Other UEs **104** in such a group may be outside the geographic coverage area **110** of a base station **102** or be otherwise unable to receive transmissions from a base station **102.** In some examples, groups of the UEs **104** communicating via D2D communications may utilize a one-to-many (1:M) system in which each UE **104** transmits to every other UE **104** in the group. In some examples, a base station **102** facilitates the scheduling of resources for D2D communications. In other cases, D2D communications are carried out between the UEs **104** without the involvement of a base station **102.**

In some systems, the D2D communication link **114** may be an example of a communication channel, such as a sidelink communication channel, between vehicles (e.g., UEs **104).** In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations **102)** using vehicle-to-network (V2N) communications, or with both.

The core network **106** may provide user authentication, access authorization, tracking, Internet Protocol (IP) connectivity, and other access, routing, or mobility functions. The core network **106** may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs **104** served by the base stations **102** associated with the core network **106.** User IP packets may be transferred through the user plane entity, which may provide IP address allocation as well as other functions. The user plane entity may be connected to IP services **116** for one or more network operators. The IP services **116** may include access to the Internet, Intranet(s), an IP Multimedia Subsystem (IMS), or a Packet-Switched Streaming Service.

Some of the network devices, such as a base station **102,** may include subcomponents such as an access network entity **118,** which may be an example of an access node controller (ANC). Each access network entity **118** may communicate with the UEs **104** through one or more other access network transmission entities **120,** which may be referred to as radio heads, smart radio heads, or transmission/reception points (TRPs). Each access network transmission entity **120** may include one or more antenna panels. In some configurations, various functions of each access network entity **118** or base station **102** may be distributed across various network devices (e.g., radio heads and ANCs) or consolidated into a single network device (e.g., a base station **102).**

The wireless communications system **100** may operate using one or more frequency bands, sometimes in the range of 300 megahertz (MHz) to 300 gigahertz (GHz). The region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs **104** located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system **100** may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system **100** may support millimeter wave (mmW) communications between the UEs **104** and the base stations **102,** and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system **100** may utilize both licensed and unlicensed radio frequency spectrum bands. For example, the wireless communications system **100** may employ License Assisted Access (LAA), LTE unlicensed radio access technology, or NR technology in an unlicensed band such as the 5 GHz industrial, scientific, and medical (ISM) band. When operating in unlicensed radio frequency spectrum bands, devices such as the base stations **102** and the UEs **104** may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station **102** or a UE **104** may be equipped with multiple antennas, which may be used to employ techniques such as transmit diversity, receive diversity, multiple-input multiple-output (MIMO) communications, or beamforming. The antennas of a base station **102** or a UE **104** may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station **102** may be located in diverse geographic locations. A base station **102** may have an antenna array with a number of rows and columns of antenna ports that the base station **102** may use to support beamforming of communications with a UE **104.** Likewise, a UE **104** may have one or more antenna arrays that may support various MIMO or beamforming operations. Additionally or alternatively, an antenna panel may support radio frequency beamforming for a signal transmitted via an antenna port.

The base stations **102** or the UEs **104** may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station **102,** a UE **104)** to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with an orientation (e.g., with respect to the antenna array of the transmitting device or receiving device, or with respect to some other orientation).

A base station **102** or a UE **104** may use beam sweeping techniques as part of beam forming operations. For example, a base station **102** may use multiple antennas or antenna arrays (e.g., antenna panels) to conduct beamforming operations for directional communications with a UE **104.** Some signals (e.g., synchronization signals, reference signals, beam selection signals, or other control signals) may be transmitted by a base station **102** multiple times in different directions. For example, the base station **102** may transmit a signal according to different beamforming weight sets associated with different directions of transmission. Transmissions in different beam directions may be used to identify (e.g., by a transmitting device, such as a base station **102,** or by a receiving device, such as a UE **104)** a beam direction for later transmission or reception by the base station **102.**

Some signals, such as data signals associated with a receiving device, may be transmitted by a base station **102** in a single beam direction (e.g., a direction associated with the receiving device, such as a UE **104).** In some examples, the beam direction associated with transmissions along a single beam direction may be determined based on a signal that was transmitted in one or more beam directions. For example, a UE **104** may receive one or more of the signals transmitted by the base station **102** in different directions and may report to the base station **102** an indication of the signal that the UE **104** received with a highest signal quality or an otherwise acceptable signal quality.

In some examples, transmissions by a device (e.g., by a base station **102** or a UE **104)** may be performed using multiple beam directions, and the device may use a combination of digital precoding or radio frequency beamforming to generate a combined beam for transmission (e.g., from a base station **102** to a UE **104).** The UE **104** may report feedback that indicates precoding weights for one or more beam directions, and the feedback may correspond to a configured number of beams across a system bandwidth or one or more sub-bands. The base station **102** may transmit a reference signal (e.g., a cell-specific reference signal (CRS), a channel state information reference signal (CSI-RS)), which may be precoded or unprecoded. The UE **104** may provide feedback for beam selection, which may be a precoding matrix indicator (PMI) or codebook-based feedback (e.g., a multi-panel type codebook, a linear combination type codebook, a port selection type codebook). Although these techniques are described with reference to signals transmitted in one or more directions by a base station **102,** a UE **104** may employ similar techniques for transmitting signals multiple times in different directions (e.g., for identifying a beam direction for subsequent transmission or reception by the UE **104)** or for transmitting a signal in a single direction (e.g., for transmitting data to a receiving device).

A receiving device (e.g., a UE **104)** may try multiple receive configurations (e.g., directional listening) when receiving various signals from the base station **102,** such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets (e.g., different directional listening weight sets) applied to signals received at multiple antenna elements of an antenna array, or by processing received signals according to different receive beamforming weight sets applied to signals received at multiple antenna elements of an antenna array, any of which may be referred to as "listening" according to different receive configurations or receive directions. In some examples, a receiving device may use a single receive configuration to receive along a single beam direction (e.g., when receiving a data signal). The single receive configuration may be aligned in a beam direction determined based on listening according to different receive configuration directions (e.g., a beam direction determined to have a highest signal strength, highest signal-to-noise ratio (SNR), or otherwise acceptable signal quality based on listening according to multiple beam directions).

The wireless communications system **100** may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE **104** and a base station **102** or a core network **106** supporting radio bearers for user plane data. At the physical layer, transport channels may be mapped to physical channels.

The UEs **104** and the base stations **102** may support retransmissions of data to increase the likelihood that data is received successfully. Hybrid automatic repeat request (HARQ) feedback is one technique for increasing the likelihood that data is received correctly over a communication link **108.** HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

As described herein, some implementations may apply the method for synchronizing Bluetooth access grants in Wi-Fi-connected devices within the wireless communications system **100.** For instance, a first UE **104** and a second UE **104,** each equipped with Bluetooth capabilities, may establish a Wi-Fi connection and determine a target beacon transmit time (TBTT) for synchronization. By utilizing the TBTT, the Bluetooth access grants between the first UE **104** and the second UE **104** may be synchronized, allowing both devices to grant medium access to Bluetooth simultaneously. This synchronization may reduce the cumulative medium time loss and enhance the efficiency of medium sharing between the Wi-Fi and Bluetooth technologies within the geographic coverage area **110** provided by the base stations **102.**

It should be appreciated by a person skilled in the art that one or more aspects of the disclosure may be implemented in a system **100** to additionally or alternatively solve other problems than those described above. Furthermore, aspects of the disclosure may provide technical improvements to "conventional" systems or processes as described herein. However, the description and appended drawings only include example technical improvements resulting from implementing aspects of the disclosure, and accordingly do not represent all of the technical improvements provided within the scope of the claims.

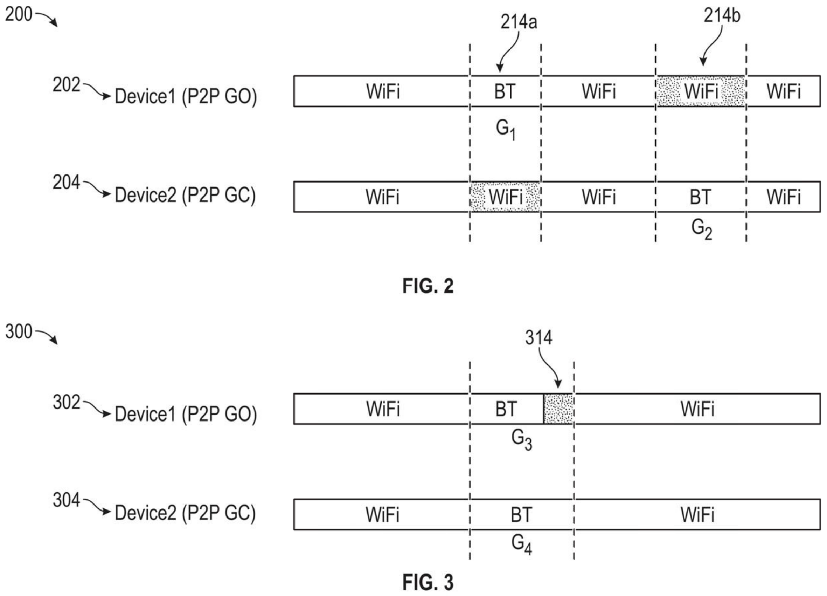

**FIG. 2** shows a traditional peer-to-peer (P2P) network **200** where independent medium grants to Bluetooth on each device is wasting the Wi-Fi medium time in the other device. It should be appreciated that while a P2P network is used as an example in various figures herein, the same techniques described herein could be applied to other Wi-Fi roles including hotspot, NAN, DLS, and the like. As depicted in **FIG. 2****,** the P2P network **200** may include one or more of a devicel **202,** a device2 **204,** a Bluetooth grant **G1** on device1 **202,** a Bluetooth grant **G2** on device2 **204,** a collision **214a** with **G1,** a collision **214b** with **G2** and/or other components.

The device1 **202** may represent a Wi-Fi-enabled device that participates in the synchronization of Bluetooth access grants. The device1 **202** may be a component such as a smartphone or a tablet that has both Wi-Fi and Bluetooth capabilities. The device1 **202** may engage in data transfer activities over a Wi-Fi network, which may necessitate coordination with Bluetooth operations to avoid interference.

The device2 **204** may represent a second Wi-Fi-enabled device that coordinates with devicel **202** to synchronize Bluetooth access grants. The device2 **204** may be another device like a laptop or a smartwatch that is capable of connecting to the same Wi-Fi network as device1 **202**. The device2 **204** may need to communicate with device1 **202** to align their respective Bluetooth activity, which may involve sharing access to the wireless medium.

In some implementations, device1 **202** is a Group Owner (GO) and device2 is a Group Client (GC). For example, in a P2P Group Owner (GO) to Group Client (GC) connection, both devices must maintain specific timing windows for network operation while managing their respective Bluetooth connections. The GO must transmit beacons on a regular schedule and both devices must be present during Notice of Absence (NoA) windows, all while potentially servicing Bluetooth audio streams or other Bluetooth traffic.

In some limitations, the wireless communication technologies used by device1 **202** and device2 **204** include Wi-Fi and Bluetooth for data transfer. The Wi-Fi may operate in the 2.4 GHz or 5 GHz frequency bands commonly used for wireless networking. The Wi-Fi may allow for the exchange of data such as files, media, or internet connectivity between devicel **202** and device2 **204**.

The Bluetooth medium illustrated in **FIG. 2** indicates the Bluetooth technology that requires access grants for coexistence with Wi-Fi technology. The Bluetooth grants (e.g., **G1** and **G2)** may operate in the same ISM band as the Wi-Fi, which may lead to potential interference without proper coordination. In some implementations, the Bluetooth grants may be used for connecting peripherals like headsets, keyboards, or for sharing data between devices.

**G1** may represent a grant period during which device1 **202** allows access to Bluetooth technology. The **G1** may be a designated time frame in which devicel **202** does not transmit over Wi-Fi to prevent interference with Bluetooth operations. The **G1** may be determined based on a schedule or an agreement between the coexisting technologies to share the wireless medium.

The **G2** may represent a grant period during which device2 **204** allows access to Bluetooth technology. The **G2** may be similar to **G1** but for device2 **204,** where it refrains from using Wi-Fi during this time. In traditional P2P networks as illustrated in **FIG. 2****,** each device is granting the medium to coexisting wireless technology independently. In a nonlimiting example, for 25% grant on GO and 15% grant on GC, the total medium loss is **G1** + **G2,** which in this example would be 40% (i.e., 25% *+* 15%)*.* As further described herein , setting **G2** to occur simultaneously with **G1** maximizes the efficiency of the medium use.

**FIG. 3** shows synchronized P2P network **300** which supports techniques for synchronizing Bluetooth access grants in Wi-Fi-connected devices in accordance with various aspects of the present disclosure. As depicted in **FIG. 3****,** the synchronized P2P network **300** may include one or more of a P2P GO device **302**, a P2P GC device **304,** a plurality of Wi-Fi mediums **306**, a Bluetooth (BT) grant **G3** on the P2P GO device **302,** a BT grant **G4** on P2P GC device **304**, a collision **314,** and/or other components.

The P2P GO device **302** may represent a device configured to operate as a group owner in a peer-to-peer network. The P2P GO device **302** may be responsible for managing connections and data flow within the network. The P2P GO device **302** may interact with P2P GC devices to establish a network. In some implementations, the P2P GO device **302** may be a smartphone or a tablet.

The P2P GC device **304** may serve as a group client in a peer-to-peer network configuration. The P2P GC device **304** may connect to the P2P GO device **302** to participate in the network. The P2P GC device **304** may receive or send data to the P2P GO device **302**. In some implementations, the P2P GC device **304** may be a laptop or a smartwatch.

The Wi-Fi medium may provide a communication channel for wireless data transmission. The Wi-Fi medium may allow for the exchange of information between devices connected to the network. The Wi-Fi medium may operate on various frequencies, such as 2.4 GHz or 5 GHz bands. In some implementations, the Wi-Fi medium may be used for activities like data transfer or streaming.

The BT medium may facilitate Bluetooth communication between connected devices. The BT medium may operate on frequencies that are part of the ISM band. The BT medium may allow for the transfer of data such as audio or files between devices. In some implementations, the BT medium may be used for connecting peripherals like keyboards or mice.

The BT grant **G3** may indicate a time period during which Bluetooth access is granted by the P2P GO device **302**. In some implementations, the BT grant **G3** may be synchronized to the BT grant **G4,** as described herein.

The BT grant **G4** may represent a time period during which the second device grants access to Bluetooth communication. In some implementations, the BT grant **G4** may be synchronized to the BT grant **G3,** as described herein. The synchronized medium grants to BT on each device results in the efficient use of shared medium. For example, the collision **314** is minimized compared to the collisions illustrated in **FIG. 2****.** Using the same example described in **FIG. 2** of 25% grant on GO and 15% grant on GC, the maximum total medium loss is max (25%, 15%) which is 25%. While **FIG. 3** illustrates a specific set of roles for the devices, this is applicable for any Wi-Fi network where both device have In-Device Coexistence.

In some implementations, Target Beacon Transmit Time (TBTT) may serve as a timing reference for synchronizing the Bluetooth grants between devices.

In some implementations, the P2P GO device **302** and the P2P GC device **304** may use the TBTT to determine the start of a Bluetooth activity window, allowing for the synchronization of the BT grant **G3** and the BT grant **G4.** The synchronization may occur by sharing WLAN timing information through shared memory, which may enable the co-located Bluetooth to align its periodic activities with the TBTT. This method may allow the P2P GO device **302** and the P2P GC device **304** to be off the Wi-Fi medium simultaneously during the BT grants, thereby reducing the cumulative time the Wi-Fi medium is not used effectively.

It should be appreciated that Wi-Fi TBTT can be used to synchronize grants between the peer devices for P2P and Soft AP networks, and for periodic activities, coexisting technology can use the WLAN timing (TBTT) information for synchronizing the start of their activity.

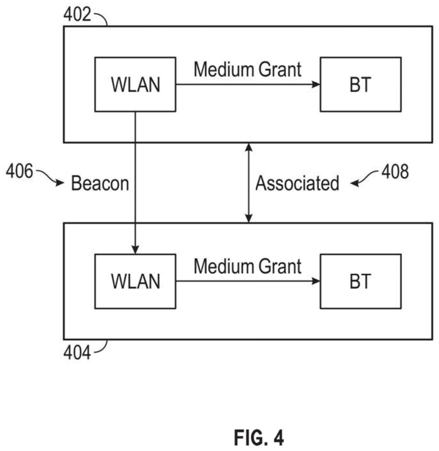

**FIG. 4** shows how TBTT can be used to sync Coexisting technology grants between two devices in accordance with various aspects of the present disclosure. **FIG. 4** may include a first device **402**, a second device **404**, a beacon **406**, an associated link **408**, and/or other components.

The first device **402** may represent a device having In-Device Coexistence (e.g., Wi-Fi and BT). In some implementations, the first device **402** may include a Wi-Fi module that may operate within a specific frequency band that is shared with other wireless technologies. Additionally, the first device **402** may include a Bluetooth module that enables wireless communication with other Bluetooth-enabled devices. The first device **402** may manage the allocation of network resources to maintain connectivity among devices. The first device **402** may coordinate the use of shared wireless spectrum. In some implementations, the first device **402** may include a Wi-Fi/Bluetooth combo chip designed for use in mobile phones.

The beacon **406** may serve as a signal broadcast by the first device **402** to manage the network and synchronize connected devices by indicating a Target Beacon Transmit Time (TBTT). The TBTT may indicate a timing reference used by the first device **402** to schedule activities, including the synchronization of Bluetooth access grants. In some implementations, the beacon **406** may contain information about the network, such as its SSID and security protocols. The beacon **406** may be transmitted at regular intervals to ensure that devices remain synchronized. The beacon **406** may be used by the second device **404** to align its access grants with the first device **402**'s schedule. For example, the beacon **406** may be used in a soft AP network to maintain connectivity with client devices.

The associated link **408** visually illustrates a connection pathway between the first device **402** and the second device **404** for data exchange. In some implementations, the associated link **408** may be established through a standard communication protocol. The associated link **408** may be used to transfer synchronization data between the first device **402** and the second device **404**. The associated link **408** may be critical for coordinating the timing of Bluetooth access grants with WLAN activities. An associated link **408** may be exemplified by a shared memory interface that allows the first device **402** and the second device **404** to exchange timing information. In some implementations, the TBTT information may be shared from Wi-Fi to another co-located technology within the device through out of band signaling to facilitate the synchronization of the Bluetooth access grants.

For example, based on the synchronization illustrated in **FIG. 4****,** the BT grants may be used by the second device **404** to perform its functions without interfering with first device **402** operations. The BT grants may be aligned with the TBTT to ensure that Bluetooth activities do not overlap with Wi-Fi transmissions. An illustrative example may be streaming videos on a smartphone using an online video streaming service and using Bluetooth headphones where time intervals reserved for Bluetooth audio streaming are synchronized between devices so the Bluetooth grants don't interfere with Wi-Fi data transfer.

In other words, the first device **402** and the second device **404** may use the TBTT as a reference to synchronize the start of Bluetooth activity windows, allowing for coordinated access grants. The first device **402** may communicate the TBTT to the second device **404** to align the timing of the BT grants with the first device **402**'s operational schedule. This coordination may reduce the cumulative medium time loss when both devices connected over Wi-Fi grant access to Bluetooth simultaneously.

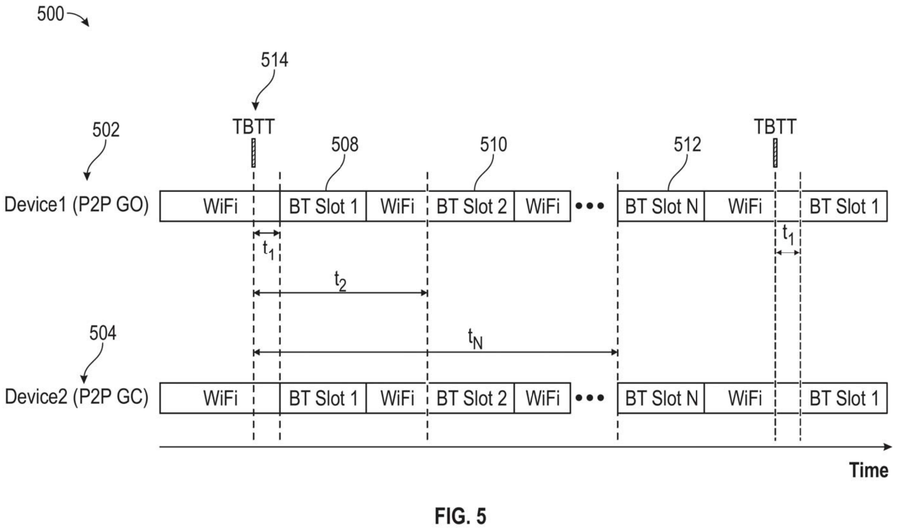

**FIG. 5** shows synchronized medium grants **500** which supports techniques for synchronizing Bluetooth access grants in Wi-Fi-connected devices in accordance with various aspects of the present disclosure. As depicted in **FIG. 5****,** the synchronized medium grants **500** may include one or more of a first device **502**, a second device **504**, Wi-Fi medium (labeled as Wi-Fi), Bluetooth grants (labeled as BT Slot 1 **508**, BT slot 2 **510,** and BT slot N **512),** a TBTT **514,** and/or other components.

The first device **502** may represent a Wi-Fi-connected device that participates in the synchronization of Bluetooth access grants. The first device **502** may be a component such as a smartphone or a tablet that is capable of connecting to a wireless network. The first device **502** may operate in conjunction with the second device **504** to coordinate the timing of Bluetooth access. In some implementations, the first device **502** may use a shared timing reference to align its Bluetooth access schedule with that of the second device **504**.

The second device **504** may represent another Wi-Fi-connected device that coordinates with the first device **502** to synchronize Bluetooth access grants. The second device **504** may be a component like a laptop or a smart television that requires coordination with the first device **502** for efficient medium use. The second device **504** may engage in data transfer activities over the Wi-Fi medium and may need to align its Bluetooth access times with the first device **502** to maintain a synchronized state. In some implementations, the second device **504** may access shared timing information to determine when to grant Bluetooth access.

The Wi-Fi medium may indicate the wireless communication medium used by the first device **502** and the second device **504** for data transfer. The Wi-Fi medium may operate on a frequency band that is shared with other wireless technologies, such as Bluetooth. The Wi-Fi medium may be subject to interference and medium sharing, which necessitates the synchronization of Bluetooth access grants.

The BT slot **1 508** may represent a designated time slot for Bluetooth access in the synchronized grant scheme. The BT slot **1 508** may be a specific period during which the first device **502** and the second device **504** allow Bluetooth operations to take precedence over Wi-Fi activities. The BT slot 1 **508** may be determined based on a timing reference such as the TBTT **514** to ensure that both devices grant Bluetooth access at the same time.

The BT slot 2 **510** may represent an additional designated time slot for Bluetooth access that follows BT slot **1 508** in the synchronized grant scheme. The BT slot 2 **510** may be allocated for a different type of Bluetooth operation or for a subsequent period of Bluetooth access. The BT slot 2 **510** may be scheduled in a sequence that follows BT slot 1 **508** to maintain an orderly pattern of Bluetooth access grants.

The BT slot N **512** may represent the final designated time slot for Bluetooth access in a series of synchronized grants. The BT slot N **512** may be the concluding slot in a pattern of multiple Bluetooth access periods. The BT slot N **512** may be used to ensure that all necessary Bluetooth operations have been accommodated within the synchronized grant scheme.

The TBTT **514** may indicate the Target Beacon Transmission Time used as a reference point for synchronizing the Bluetooth access grants between devices. The TBTT **514** may serve as a timing anchor that both the first device **502** and the second device **504** use to align their Bluetooth access schedules. The TBTT **514** may be communicated between the first device **502** and the second device **504** to establish a common understanding of when to grant Bluetooth access.

In some implementations, the first device **502** and the second device **504** may use the TBTT **514** to synchronize the start of Bluetooth activity windows, allowing for the coordination of medium access during periods when Bluetooth grants are given. The first device **502** and the second device **504** may share memory to communicate WLAN timing information, which may be used by co-located Bluetooth to align its periodic activities with the TBTT **514.** This shared timing may allow the first device **502** and the second device **504** to be off the Wi-Fi medium simultaneously during the BT slots **508, 510, 512,** reducing the cumulative medium time loss that would otherwise occur if the devices were not synchronized.

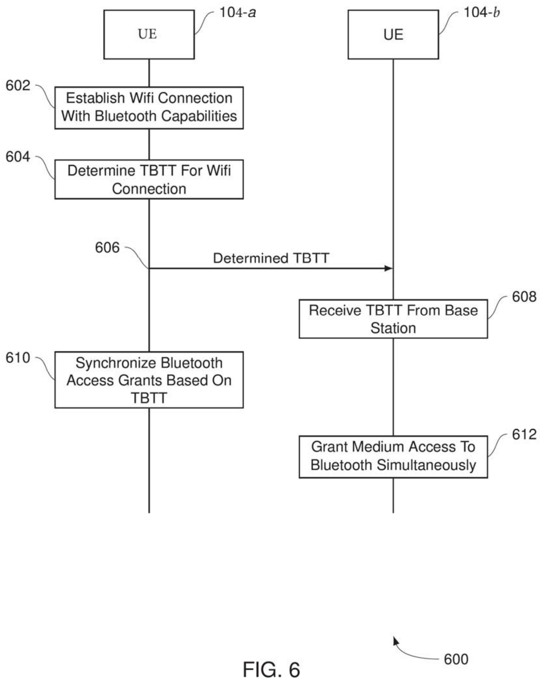

**FIG. 6** illustrates an example of a process flow **600** that supports synchronizing Bluetooth access grants in Wi-Fi-connected devices in accordance with aspects of the present disclosure. In some examples, the process flow **600** may include a first UE 104-a and a second UE 104-b, which may be examples of corresponding devices described herein. In some implementations, the method involves first UE 104-a and second UE 104-b establishing a Wi-Fi connection, determining a TBTT, and synchronizing Bluetooth access grants based on the TBTT to simultaneously grant medium access to Bluetooth on both first UE 104-a and second UE 104-b.

At **602,** the first UE 104-a may establish a Wi-Fi connection with the second UE 104-b, both devices having Bluetooth capabilities. For example, the first UE 104-a may use a synchronized Bluetooth grant to ensure that the Wi-Fi connection with the second UE 104-b is not interrupted by Bluetooth activities. In some implementations, the second UE 104-b may delay Bluetooth activities to prioritize the Wi-Fi connection establishment process with the first UE 104-a. The first UE 104-a and the second UE 104-b may utilize Target Beacon Transmit Time (TBTT) information to align their Bluetooth activities, thereby minimizing the potential for interference during the Wi-Fi connection setup.

At **604,** the first UE 104-a may determine a target beacon transmit time (TBTT) for the established Wi-Fi connection. For example, the first UE 104-a may use the determined TBTT to synchronize activities with the second UE 104-b. The second UE 104-b may then adjust its own timing based on the TBTT received from the first UE 104-a to maintain synchronization for the duration of the Wi-Fi connection.

At **606,** the first UE 104-a may transmit the determined TBTT to the second UE 104-b. For example, the first UE 104-a may use a wireless communication protocol to send the TBTT information to the second UE 104-b. In some implementations, the second UE 104-b may receive the TBTT and store it in a memory component within the device. The first UE 104-a may choose a specific time slot to transmit the TBTT to ensure that the second UE 104-b is ready to receive the information without interference from other operations.

At **608,** the second UE 104-b may receive the TBTT from the first UE 104-a. For example, the second UE 104-b may use the received TBTT to align its timing for communication activities. In some implementations, the second UE 104-b may adjust its power-saving mechanisms based on the TBTT to enter a low-power state when communication is not required. Additionally, the second UE 104-b may utilize the TBTT to schedule its own Bluetooth activities to avoid conflict with the Wi-Fi operations, ensuring coexistence with the first UE 104-a's transmission schedule.

At **610,** the first UE 104-a may synchronize Bluetooth access grants with the second UE 104-b based on the received TBTT. For example, the first UE 104-a may use the TBTT as a reference point to align the timing of Bluetooth access grants with the second UE 104-b's Bluetooth activity schedule. In some implementations, the first UE 104-a may adjust the timing of the Bluetooth access grants to minimize the overlap with the second UE 104-b's Wi-Fi activity, thereby allowing for more efficient use of the wireless medium. The first UE 104-a may also communicate with the second UE 104-b to determine the optimal timing for these Bluetooth access grants to ensure that both Wi-Fi and Bluetooth operations are harmonized.

At **612,** the second UE 104-b may grant medium access to Bluetooth simultaneously with the first UE 104-a in response to the synchronized Bluetooth access grants. For example, the second UE 104-b may utilize the shared memory to access the WLAN timing information for coordinating the grant. In some implementations, the second UE 104-b may adjust the timing of its Bluetooth activities based on the TBTT received from the first UE 104-a to ensure the grants are synchronized. The second UE 104-b may also delay certain Bluetooth activities, such as ACL, A2DP, or BLE scans, to align with the synchronized schedule established with the first UE 104-a.

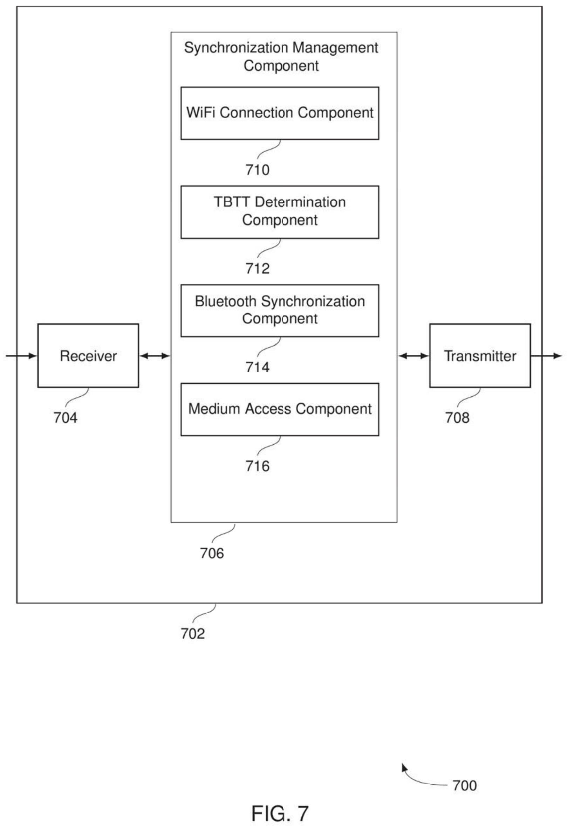

**FIG. 7** shows a block diagram **700** of an apparatus **702** that supports synchronizing Bluetooth access grants in Wi-Fi-connected devices in accordance with various aspects of the present disclosure. The apparatus **702** may include an input module **704**, a synchronization management component **706**, and an output module **708.** The apparatus **702** may also include a processor. Each of these components may be in communication with one another (e.g., via one or more buses). In some cases, the apparatus **702** may be an example of a user terminal, a database server, or a system containing multiple computing devices.

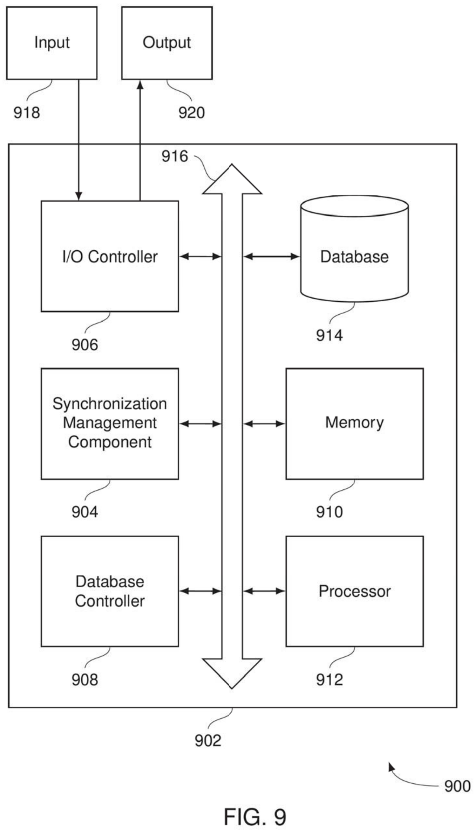

The input module **704** may manage input signals for the apparatus **702**. For example, the input module **704** may identify input signals based on an interaction with a modem, a keyboard, a mouse, a touchscreen, or a similar device. These input signals may be associated with user input or processing at other components or devices. In some cases, the input module **704** may utilize an operating system such as iOS^{®}, ANDROID^{®}, MS-DOS^{®}, MS-WINDOWS^{®}, OS/2^{®}, UNIX^{®}, LINUX^{®}, or another known operating system to handle input signals. The input module **704** may send aspects of these input signals to other components of the apparatus **702** for processing. For example, the input module **704** may transmit input signals to the synchronization management component **706** to support face detection to address privacy in publishing image datasets. In some cases, the input module **704** may be a component of an input/output (I/O) controller **906** as described with reference to **FIG. 9****.**

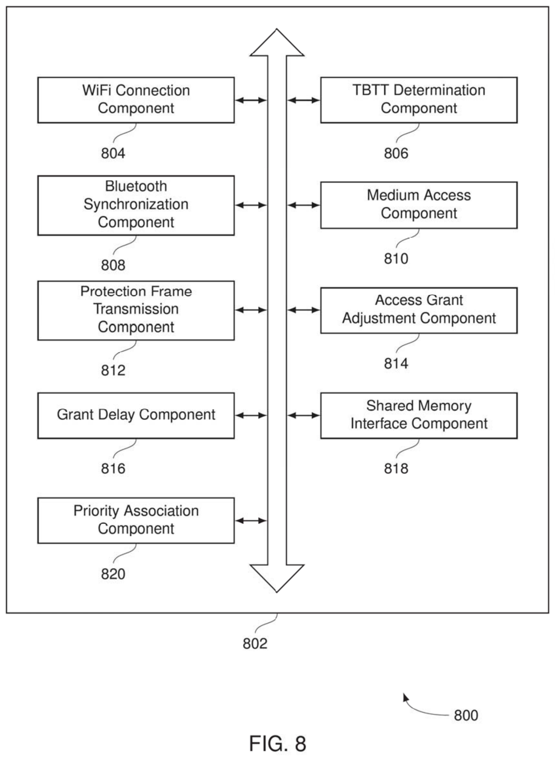

The synchronization management component **706** may include one or more of a Wi-Fi connection component **710,** a TBTT determination component **712,** a Bluetooth synchronization component **714,** a medium access component **716,** and/or other components. The synchronization management component **706** may be an example of aspects of the synchronization management component **802** or **904** described with reference to **FIGS. 8** and **9****.**

The Wi-Fi connection component **710** may be configured as or otherwise support a means for establishing a Wi-Fi connection between a first device and a second device, where both devices have Bluetooth capabilities. The TBTT determination component **712** may be configured as or otherwise support a means for determining a target beacon transmit time (TBTT) for the Wi-Fi connection. The Bluetooth synchronization component **714** may be configured as or otherwise support a means for synchronizing Bluetooth access grants between the first device and the second device based on the TBTT. The medium access component **716** may be configured as or otherwise support a means for granting medium access to Bluetooth on the first device and the second device simultaneously in response to the synchronized Bluetooth access grants in some implementations.

The output module **708** may manage output signals for the apparatus **702**. For example, the output module **708** may receive signals from other components of the apparatus **702**, such as the synchronization management component **706,** and may transmit these signals to other components or devices. In some specific examples, the output module **708** may transmit output signals for display in a user interface, for storage in a database or data store, for further processing at a server or server cluster, or for any other processes at any number of devices or systems. In some cases, the output module **708** may be a component of an I/O controller **906** as described with reference to **FIG. 9****.**

**FIG. 8** shows a block diagram **800** of a synchronization management component **802** that supports synchronizing Bluetooth access grants in Wi-Fi-connected devices in accordance with various aspects of the present disclosure. The synchronization management component **802** may be an example of aspects of a synchronization management component **706**, a synchronization management component **904**, or both, as described herein. The synchronization management component **802**, or various components thereof, may be an example of means for performing various aspects of synchronizing Bluetooth access grants in Wi-Fi-connected devices as described herein. For example, one or more aspects of the synchronization management component **802** may be included in one or more of a base station **102,** a UE **104,** an access network entity **118,** an access network transmission entity **120,** and/or other components of the wireless communications system **100,** as described in connection with **FIG. 1****.** According to some implementations, the synchronization management component **802** may include one or more of a Wi-Fi connection component **804**, a TBTT determination component **806**, a Bluetooth synchronization component **808**, a medium access component **810,** a protection frame transmission component **812,** an access grant adjustment component **814,** a grant delay component **816,** a shared memory interface component **818,** a priority association component **820,** and/or other components. Each of these components may communicate, directly or indirectly, with one another (e.g., via one or more buses).

The Wi-Fi connection component **804** may be configured as or otherwise support a means for establishing a Wi-Fi connection between a first device and a second device, the first device and the second device each having Bluetooth capabilities. In some implementations, the Wi-Fi connection component **804** may leverage the synchronized Bluetooth grants to minimize medium time lost during data transfer. In some implementations, the Wi-Fi connection component **804** may utilize the Target Beacon Transmit Time (TBTT) to align the timing of Bluetooth activities between the two devices. In some implementations, the Wi-Fi connection component **804** may facilitate the sharing of WLAN timing information to coordinate the start of Bluetooth activity windows, ensuring synchronized grants.

The TBTT determination component **806** may be configured as or otherwise support a means for determining a target beacon transmit time (TBTT) for the Wi-Fi connection. In some implementations, the TBTT determination component **806** may utilize information from the Wi-Fi connection component **804** to ascertain the TBTT. The TBTT determination component **806** may reference internal clocks or timers to establish the timing for TBTT. The TBTT determination component **806** may work in conjunction with the synchronization component to align Bluetooth grants with the TBTT.

The Bluetooth synchronization component **808** may be configured as or otherwise support a means for synchronizing Bluetooth access grants between the first device and the second device based on the TBTT. In some implementations, the Bluetooth synchronization component **808** may utilize shared memory to exchange TBTT information between the first device and the second device. The Bluetooth synchronization component **808** may adjust the timing of Bluetooth access grants to align with the TBTT determined by the TBTT determination component **806**. The Bluetooth synchronization component **808** may coordinate with the Wi-Fi connection component **804** to ensure that Bluetooth access grants are synchronized across devices that are connected via Wi-Fi.

The medium access component **810** may be configured as or otherwise support a means for granting medium access to Bluetooth on the first device and the second device simultaneously in response to the synchronized Bluetooth access grants. In some implementations, the medium access component **810** may utilize shared memory to convey the timing information necessary for the grant. The medium access component **810** may determine the specific time slots during which Bluetooth on both devices may access the medium. The medium access component **810** may coordinate with the Bluetooth synchronization component **808** to ensure the access timings are aligned.

In some examples, the protection frame transmission component **812** may be configured as or otherwise support a means for transmitting a protection frame from the first device to the second device in response to the synchronized Bluetooth access grants to prevent data transmission from the second device during the Bluetooth access period. In some implementations, the protection frame transmission component **812** may utilize shared memory to access the timing information necessary for the transmission of the protection frame. The protection frame transmission component **812** may be designed to operate within the constraints of the existing Wi-Fi/Bluetooth coexistence protocols. In some implementations, the protection frame transmission component **812** may be integrated into the Wi-Fi/BT Combo Chip (e.g., Wi-Fi/BT Combo Chip 4390B1) to facilitate the coexistence of Wi-Fi and Bluetooth communications.

In some examples, the access grant adjustment component **814** may be configured as or otherwise support a means for adjusting the duration of the Bluetooth access grants based on the type of Bluetooth activity. The access grant adjustment component **814** may take into account the specific requirements of different Bluetooth profiles. For instance, the access grant adjustment component **814** may allow for longer access periods for activities such as A2DP streaming, which involves continuous audio transmission. In some implementations, the access grant adjustment component **814** may provide shorter access durations for activities like LE scans that may not require extended communication periods.

In some examples, the grant delay component **816** may be configured as or otherwise support a means for delaying the Bluetooth access grants in response to a request from the first device or the second device to accommodate a high-priority Wi-Fi data transfer occurring at the same time as the TBTT. In some implementations, the grant delay component **816** may receive a signal indicating a high-priority data transfer is in progress, which may necessitate a postponement of Bluetooth activities. The grant delay component **816** may then communicate with the Bluetooth synchronization component **808** to adjust the timing of the access grants. In some implementations, the grant delay component **816** may interact with the medium access component **810** to ensure that the high-priority Wi-Fi data transfer is given precedence over Bluetooth access.

In some examples, the shared memory interface component **818** may be configured as or otherwise support a means for sharing the TBTT information between the first device and the second device through a shared memory interface to facilitate the synchronization of the Bluetooth access grants. The shared memory interface component **818** may allow the first device to write the TBTT information into a memory space that is accessible by the second device. The second device may then read the TBTT information from the shared memory space to align its Bluetooth access grants with those of the first device. In some implementations, the shared memory interface component **818** may be utilized to update the TBTT information in real-time, ensuring that any changes in the TBTT are promptly reflected in both devices.

In some examples, the priority association component **820** may be configured as or otherwise support a means for associating a priority level with each Bluetooth access grant. In some implementations, the priority association component **820** may allow for the assignment of different priority levels to various types of Bluetooth activities, such as voice calls or data transfers. In some implementations, the priority association component **820** may utilize information regarding the nature of the Bluetooth activity to assign an appropriate priority level. In some implementations, the priority association component **820** may dynamically adjust the priority levels based on the current network conditions and the type of Bluetooth activity being initiated.

**FIG. 9** shows a diagram of a system **900** including a device **902** that supports synchronizing Bluetooth access grants in Wi-Fi-connected devices in accordance with aspects of the present disclosure. The device **902** may be an example of or include the components of a database server or an apparatus **702** as described herein. The device **902** may include components for bi-directional data communications including components for transmitting and receiving communications, including a synchronization management component **904**, an I/O controller **906**, a database controller **908**, memory **910,** a processor **912,** and a database **914.** These components may be in electronic communication via one or more buses (e.g., bus **916).**

The synchronization management component **904** may be an example of a synchronization management component **706 or 802** as described herein. For example, the synchronization management component **904** may perform any of the methods or processes described above with reference to FIGS. **7** and **8****.** In some cases, the synchronization management component **904** may be implemented in hardware, software executed by a processor, firmware, or any combination thereof.

The I/O controller **906** may manage input signals **918** and output signals **920** for the device **902.** The I/O controller **906** may also manage peripherals not integrated into the device **902**. In some cases, the I/O controller **906** may represent a physical connection or port to an external peripheral. In some cases, the I/O controller **906** may utilize an operating system such as iOS^{®}, ANDROID^{®}, MS-DOS^{®}, MS-WINDOWS^{®}, OS/2^{®}, UNIX^{®}, LINUX^{®}, or another known operating system. In other cases, the I/O controller **906** may represent or interact with a modem, a keyboard, a mouse, a touchscreen, or a similar device. In some cases, the I/O controller **906** may be implemented as part of a processor. In some cases, a user may interact with the device **902** via the I/O controller **906** or via hardware components controlled by the I/O controller **906**.

The database controller **908** may manage data storage and processing in a database **914.** In some cases, a user may interact with the database controller **908**. In other cases, the database controller **908** may operate automatically without user interaction. The database **914** may be an example of a single database, a distributed database, multiple distributed databases, a data store, a data lake, or an emergency backup database.

Memory **910** may include random-access memory (RAM) and read-only memory (ROM). The memory **910** may store computer-readable, computer-executable software including instructions that, when executed, cause the processor to perform various functions described herein. In some cases, the memory **910** may contain, among other things, a basic input/output system (BIOS) which may control basic hardware or software operation such as the interaction with peripheral components or devices.

The processor **912** may include an intelligent hardware device, (e.g., a general-purpose processor, a DSP, a central processing unit (CPU), a microcontroller, an ASIC, an FPGA, a programmable logic device, a discrete gate or transistor logic component, a discrete hardware component, or any combination thereof). In some cases, the processor **912** may be configured to operate a memory array using a memory controller. In other cases, a memory controller may be integrated into the processor **912.** The processor **912** may be configured to execute computer-readable instructions stored in a memory **910** to perform various functions (e.g., functions or tasks supporting synchronizing Bluetooth access grants in Wi-Fi-connected devices).

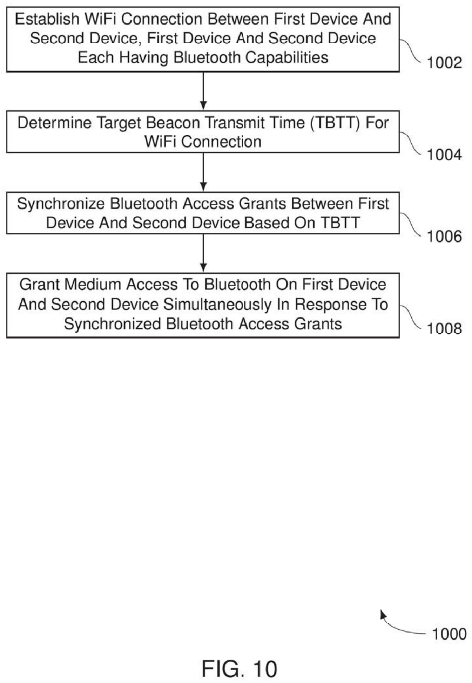

**FIG. 10** shows a flowchart illustrating a method **1000** that supports synchronizing Bluetooth access grants in Wi-Fi-connected devices in accordance with various aspects of the present disclosure. The operations of the method **1000** may be implemented by one or more components of a networked computing system as described herein. For example, the operations of the method **1000** may be performed by a synchronization management component as described with reference to **FIGS. 7** through **9****.** In some examples, one or more components of a networked computing system may execute a set of instructions to control the functional elements of the component(s) to perform the described functions. Additionally or alternatively, the one or more components of a networked computing system may perform aspects of the described functions using special-purpose hardware.

At **1002,** the method **1000** may include establishing a Wi-Fi connection between a first device and a second device, the first device and the second device each having Bluetooth capabilities. The operations of **1002** may be performed in accordance with examples as disclosed herein. In some examples, aspects of the operations of **1002** may be performed by a Wi-Fi connection component **804** as described with reference to **FIG. 8****.**

At **1004,** the method **1000** may include determining a target beacon transmit time (TBTT) for the Wi-Fi connection. The operations of **1004** may be performed in accordance with examples as disclosed herein. In some examples, aspects of the operations of **1004** may be performed by a TBTT determination component **806** as described with reference to **FIG. 8****.**

At **1006,** the method **1000** may include synchronizing Bluetooth access grants between the first device and the second device based on the TBTT. The operations of **1006** may be performed in accordance with examples as disclosed herein. In some examples, aspects of the operations of **1006** may be performed by a Bluetooth synchronization component **808** as described with reference to **FIG. 8****.**

At **1008,** the method **1000** may include granting medium access to Bluetooth on the first device and the second device simultaneously in response to the synchronized Bluetooth access grants. The operations of **1008** may be performed in accordance with examples as disclosed herein. In some examples, aspects of the operations of **1008** may be performed by a medium access component **810** as described with reference to **FIG. 8****.**

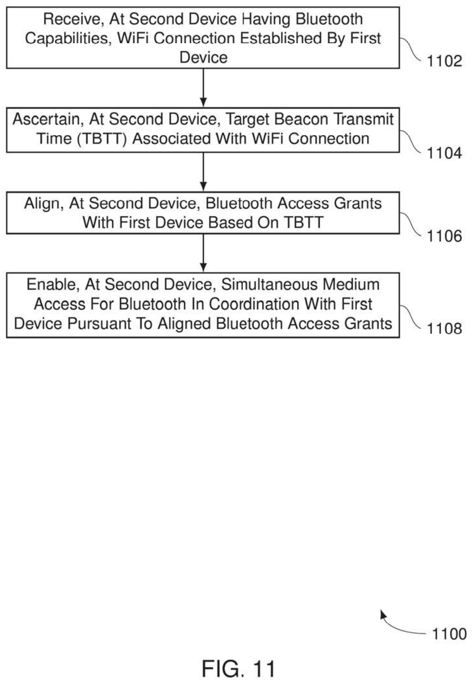

**FIG. 11** shows a flowchart illustrating a method **1100** that supports synchronizing Bluetooth access grants in Wi-Fi-connected devices in accordance with various aspects of the present disclosure. The operations of the method **1100** may be implemented by one or more components of a networked computing system as described herein. For example, the operations of the method **1100** may be performed by a synchronization management component as described with reference to **FIGS. 7** through **9****.** In some examples, one or more components of a networked computing system may execute a set of instructions to control the functional elements of the component(s) to perform the described functions. Additionally or alternatively, the one or more components of a networked computing system may perform aspects of the described functions using special-purpose hardware.

At **1102,** the method **1100** may include receiving, at a second device having Bluetooth capabilities, a Wi-Fi connection established by a first device. The operations of **1102** may be performed in accordance with examples as disclosed herein. In some examples, aspects of the operations of **1102** may be performed by a Wi-Fi connection component **804** as described with reference to **FIG. 8****.**

At **1104,** the method **1100** may include ascertaining, at the second device, a target beacon transmit time (TBTT) associated with the Wi-Fi connection. The operations of **1104** may be performed in accordance with examples as disclosed herein. In some examples, aspects of the operations of **1104** may be performed by a TBTT determination component 806 as described with reference to **FIG. 8****.**

At **1106,** the method **1100** may include aligning, at the second device, Bluetooth access grants with the first device based on the TBTT. The operations of **1106** may be performed in accordance with examples as disclosed herein. In some examples, aspects of the operations of **1106** may be performed by a Bluetooth synchronization component **808** as described with reference to **FIG. 8****.**

At **1108,** the method **1100** may include enabling, at the second device, simultaneous medium access for Bluetooth in coordination with the first device pursuant to the aligned Bluetooth access grants. The operations of **1108** may be performed in accordance with examples as disclosed herein. In some examples, aspects of the operations of **1108** may be performed by a medium access component **810** as described with reference to **FIG. 8****.**

It should be noted that the methods described herein describe possible implementations, and that the operations and the steps may be rearranged or otherwise modified and that other implementations are possible. Furthermore, aspects from two or more of the methods may be combined.

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in block diagram form in order to avoid obscuring the concepts of the described examples.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label.

Information and signals described herein may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein can be implemented using software executed by a processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items (for example, a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media can comprise RAM, ROM, electrically erasable programmable read only memory (EEPROM), compact disk (CD) ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

The description herein is provided to enable a person skilled in the art to make or use the disclosure. Various modifications to the disclosure will be readily apparent to those skilled in the art, and the generic principles defined herein may be applied to other variations without departing from the scope of the disclosure. Thus, the disclosure is not limited to the examples and designs described herein, but is to be accorded the broadest scope consistent with the principles and novel features disclosed herein.

## Claims

1. A system, comprising:
circuitry configured to
establish a Wi-Fi connection between a first device and a second device, each having Bluetooth capabilities;
determine a target beacon transmit time, TBTT, for the Wi-Fi connection; synchronize Bluetooth access grants between the first device and the second device based on the TBTT;
grant medium access to Bluetooth on the first device and the second device simultaneously in response to the synchronized Bluetooth access grants.

2. The system of claim 1, wherein the circuitry is further configured to
transmit a protection frame from the first device to the second device in response to the synchronized Bluetooth access grants to prevent data transmission from the second device during the Bluetooth access period.

3. The system of claim 1 or 2, wherein the circuitry is further configured to
delay the Bluetooth access grants in response to a request from the first device or the second device to accommodate a high-priority Wi-Fi data transfer occurring at the same time as the TBTT.

4. The system of any one of the claims 1 to 3, wherein the circuitry is further configured to
share the TBTT information from Wi-Fi to another co-located technology within the device through out of band signaling to facilitate the synchronization of the Bluetooth access grants.

5. The system of any one of the claims 1 to 4, wherein the circuitry is further configured to
associate a priority level with each Bluetooth access grant, wherein the priority level determines the order in which the first device and the second device grant medium access to Bluetooth.

6. The system of any one of the claims 1 to 5, wherein
the Wi-Fi connection between the first and second device is a direct connection.

7. The system of any one of the claims 1 to 6, wherein
the Wi-Fi connection between the first and second device is an indirect connection where the first and second device are connected through a third device.

8. The system of claim 7, wherein
the third device is an Access Point or a P2P Group Owner.

9. The system of any one of the claims 1 to 8, wherein the circuitry is further configured to
adjust the duration of the Bluetooth access grants based on a type of Bluetooth activity.

10. The system of claim 9, wherein
the Bluetooth activity includes Bluetooth profiles using basic rate/enhanced data rate asynchronous connection-oriented links, basic rate/enhanced data rate inquiry, paging, low energy scans, and low energy initialization scans.

11. The system of claim 9 or 10, wherein
the Bluetooth activity includes Bluetooth profiles using Wi-Fi 802.15.4 based standards; wherein in particular
the circuitry is further configured to
exchange information between the first device and the second device regarding their respective Bluetooth access grants through a dedicated control channel.

12. The system of any one of the claims 1 to 11, wherein the circuitry is further configured to
adapt the synchronized Bluetooth grants to account for latency requirements of Bluetooth activities for time-sensitive applications.

13. An apparatus, comprising:
circuitry configured to
establish a Wi-Fi connection with a second device,
determine a target beacon transmit time, TBTT, associated with the Wi-Fi connection, align Bluetooth access grants with the second device based on the TBTT,
enable simultaneous medium access for Bluetooth in coordination with the second device pursuant to the aligned access grants.

14. The apparatus of claim 13, wherein the circuitry is further configured to control and/or carry out at least one of the following:
receive a protection frame from the second device in response to the synchronized Bluetooth access grants to prevent data transmission from the apparatus during the Bluetooth access period;
adjust the duration of the Bluetooth access grants based on a type of Bluetooth activity;
delay the Bluetooth access grants in response to a request from the second device to accommodate a high-priority Wi-Fi data transfer occurring at the same time as the TBTT;
share the TBTT information from Wi-Fi to another co-located technology within the apparatus through out of band signaling to facilitate the synchronization of the Bluetooth access grants;
associate a priority level with each Bluetooth access grant, wherein the priority level determines the order in which the apparatus and the second device grant medium access to Bluetooth.

15. A non-transitory computer-readable medium storing code, the code comprising instructions executable by a processor to:
establish a Wi-Fi connection between a first device and a second device, each having Bluetooth capabilities;
determine a target beacon transmit time, TBTT, for the Wi-Fi connection;
synchronize Bluetooth access grants between the first device and the second device based on the TBTT;
grant medium access to Bluetooth on the first device and the second device simultaneously in response to the synchronized Bluetooth access grants.
